# FASCICULE DE BREVET EUROPEEN

(11) **EP 1 771 826 B1**
(45) Date de publication et mention de la délivrance du brevet: **25.06.2008**
(21) Numéro de dépôt: 05791951.6
(22) Date de dépôt: 13.07.2005
(51) Int. Cl.: G07F 7/00

(54) **ALIMENTATION D'UN TERMINAL DE PAIEMENT ÉLECTRONIQUE PORTABLE**
ANTREIBEN EINES TRAGBAREN ENDGERÄTS FÜR ELEKTRONISCHES ZAHLEN
POWERING A PORTABLE ELECTRONIC PAYMENT TERMINAL

(30) Priorité: 16.07.2004 FR 0451553
(43) Date de publication de la demande: 11.04.2007
(73) Titulaire: SAGEM MONETEL, 75015 Paris (FR)
(72) Inventeur: COUSSIEU, Alain, F-07000 FLAVIAC (FR)
(74) Mandataire: de Beaumont, Michel
(86) Numéro de dépôt international: PCT/FR2005/050587
(87) Numéro de publication internationale: WO 2006/016091

(56) Documents cités:
- WO-A-01/37229
- DE-A1- 10 050 298
- FR-A- 2 739 709
- FR-A- 2 753 557

## Description

### Domaine de l'invention

La présente invention concerne les terminaux de paiement électroniques portables, et plus précisément les terminaux de paiement électroniques portables comportant un terminal mobile et un socle fixe.

### Exposé de l'art antérieur

Pour un terminal de paiement électronique portable à terminal mobile et socle fixe comme celui du document D1, le terminal mobile peut être posé sur le socle ou retiré de celui-ci. Le terminal mobile comporte généralement un lecteur de carte adapté à recevoir une carte de paiement du type carte à puce ou carte magnétique, un clavier, un écran, une imprimante et un processeur relié à l'ensemble de ces composants et adapté à commander le déroulement d'une opération de paiement. Le terminal mobile est généralement retiré du socle pour faciliter l'introduction dans le lecteur de la carte de paiement d'un utilisateur.

Le socle est relié à une source d'alimentation externe, typiquement le réseau de distribution d'énergie électrique, qui alimente un modem adapté à échanger des données avec un réseau de télécommunications, typiquement le réseau téléphonique. Le terminal mobile comprend une batterie pour assurer l'alimentation des composants du terminal mobile lorsque le terminal mobile n'est pas posé sur le socle fixe. La batterie doit pouvoir fournir des courants d'intensité élevée, notamment pour alimenter l'imprimante qui peut avoir des appels de courant de plusieurs ampères. La recharge de la batterie du terminal mobile est assurée par la source d'alimentation externe du socle en replaçant le terminal mobile sur le socle.

Pour certains types de paiement, par exemple pour des paiements à carte à puce à montant élevé, ou des paiements par carte magnétique, il est nécessaire, au cours d'une opération de paiement, de replacer le terminal mobile sur le socle fixe de façon que des données soient échangées, par l'intermédiaire du modem, sur le réseau téléphonique. Il s'agit, par exemple, d'une demande d'autorisation de paiement ou d'opérations de vérification transmises par le terminal portable vers un organisme bancaire.

Lorsque le réseau de distribution d'énergie électrique est défaillant, le modem du socle fixe ne peut pas fonctionner. Il n'est alors pas possible d'effectuer des paiements qui nécessitent l'échange de données par l'intermédiaire du réseau téléphonique.

Toutefois, dans de nombreux cas où le réseau de distribution d'énergie électrique est défaillant, le réseau téléphonique fonctionne correctement. Il est donc souhaitable de pouvoir continuer à échanger des données sur le réseau téléphonique, lorsque celui-ci fonctionne normalement, même lorsque le réseau de distribution d'énergie électrique est défaillant.

On peut prévoir une batterie au niveau du socle fixe pour alimenter le modem du socle fixe lors d'une interruption du réseau de distribution d'énergie électrique. Toutefois, une telle batterie présente un encombrement et un coût non négligeables.

### Résumé de l'invention

La présente invention vise à proposer un terminal de paiement électronique portable, constitué d'un terminal mobile et d'un socle fixe, qui permet l'échange de données sur un réseau de télécommunications auquel est relié le socle fixe même lorsque la source d'alimentation électrique du socle fixe est défaillante et qui ne requiert pas de batteries au niveau du socle fixe.

Un autre objet de la présente invention est de proposer un terminal de paiement électronique portable qui soit de conception simple.

Un autre objet de la présente invention est de proposer un terminal de paiement électronique portable, comportant une batterie adaptée à fournir des courants d'intensité élevée, l'alimentation du modem du socle fixe étant assurée même lorsque la source d'alimentation électrique du socle fixe est défaillante.

Pour atteindre ces objets, la présente invention prévoit un terminal de paiement électronique comprenant un socle destiné à être alimenté par une source d'énergie externe et comprenant un modem destiné à être relié à un réseau de télécommunications ; et un terminal mobile adapté à être relié au socle ou à être maintenu à distance du socle et comportant un moyen d'acquisition de données relatives à une opération de paiement, et une batterie adaptée à alimenter les composants du terminal mobile lorsque celui-ci est à distance du socle, dans lequel le terminal mobile comprend des moyens de commande de l'alimentation du modem par sa batterie lorsque le terminal mobile est relié au socle et que la source d'énergie externe est défaillante.

Selon un mode de réalisation de l'invention, le terminal mobile et le socle comprennent des moyens de charge de la batterie lorsque le terminal mobile est relié au socle.

Selon un mode de réalisation de l'invention, le terminal mobile comprend une borne électrique adaptée à établir une liaison électrique avec le socle lorsque le terminal mobile est relié au socle, la borne électrique étant reliée à la batterie par une première ligne comprenant un premier interrupteur et par une seconde ligne comprenant un second interrupteur, le terminal mobile comprenant en outre des moyens de fermeture du premier interrupteur et d'ouverture du second interrupteur lorsque la batterie est en cours de recharge et des moyens d'ouverture du premier interrupteur et de fermeture du second interrupteur lorsque la batterie alimente le modem.

Selon un mode de réalisation de l'invention, la batterie est adaptée à fournir un courant électrique ayant une intensité temporairement supérieure à 5 ampères, le second interrupteur étant adapté à limiter l'intensité du courant le traversant.

Selon un mode de réalisation de l'invention, le terminal mobile comprend un circuit élévateur de tension sur la seconde ligne entre la batterie et le second interrupteur.

Selon un mode de réalisation de l'invention, le terminal mobile comprend un détecteur de tension adapté à déterminer la tension au niveau de la borne électrique.

La présente invention prévoit également un procédé de commande d'un terminal de paiement électronique comprenant un socle destiné à être alimenté par une source d'énergie externe, ledit socle comprenant un modem destiné à être relié à un réseau de télécommunications, ledit terminal de paiement comprenant, en outre, un terminal mobile adapté à être relié au socle ou à être maintenu à distance du socle, ledit terminal mobile comportant un moyen d'acquisition de données relatives à une opération de paiement, et une batterie adaptée à alimenter les composants du terminal mobile lorsque celui-ci est à distance du socle, le procédé comprenant les étapes consistant à déterminer si le terminal mobile est relié au socle et si la source d'énergie externe est défaillante ; et, dans l'affirmative, à commander l'alimentation du modem par la batterie.

Selon un mode de réalisation de l'invention, le terminal mobile comprend un processeur adapté à échanger des données avec le modem lorsque le terminal mobile est relié au socle, et une borne électrique adaptée à établir une liaison électrique avec le socle lorsque le terminal mobile est relié au socle, la borne électrique étant reliée à la batterie par une première ligne comprenant un premier interrupteur et par une seconde ligne comprenant un second interrupteur, le procédé comprenant les étapes suivantes :
a) ouvrir le premier interrupteur et le second interrupteur (54) ;
b) déterminer si une tension nulle est présente au niveau de la borne électrique ;
c) dans l'affirmative, fermer le second interrupteur ;
d) amener le processeur à échanger des données avec le modem ; et
e) si le processeur parvient à échanger des données avec le modem, commander l'alimentation du modem par la batterie.

Selon un mode de réalisation de l'invention, si à l'étape b), une tension non nulle est présente au niveau de la borne électrique, le procédé comprend l'étape consistant à fermer le premier interrupteur pour recharger la batterie à partir de la source d'énergie externe.

Selon un mode de réalisation de l'invention, si à l'étape d) le processeur ne parvient pas à échanger des données avec le modem, le procédé comprend l'étape consistant à ouvrir le second interrupteur.

### Brève description des dessins

Ces objets, caractéristiques et avantages, ainsi que d'autres de la présente invention seront exposés en détail dans la description suivante d'un exemple de réalisation particulier faite à titre non-limitatif en relation avec les figures jointes suivantes :
la figure 1 représente schématiquement un exemple de réalisation d'un terminal de paiement électronique portable selon l'invention ; et
la figure 2 représente schématiquement des étapes successives d'un exemple de procédé d'alimentation d'un modem du terminal de paiement électronique portable selon l'invention.

### Description détaillée

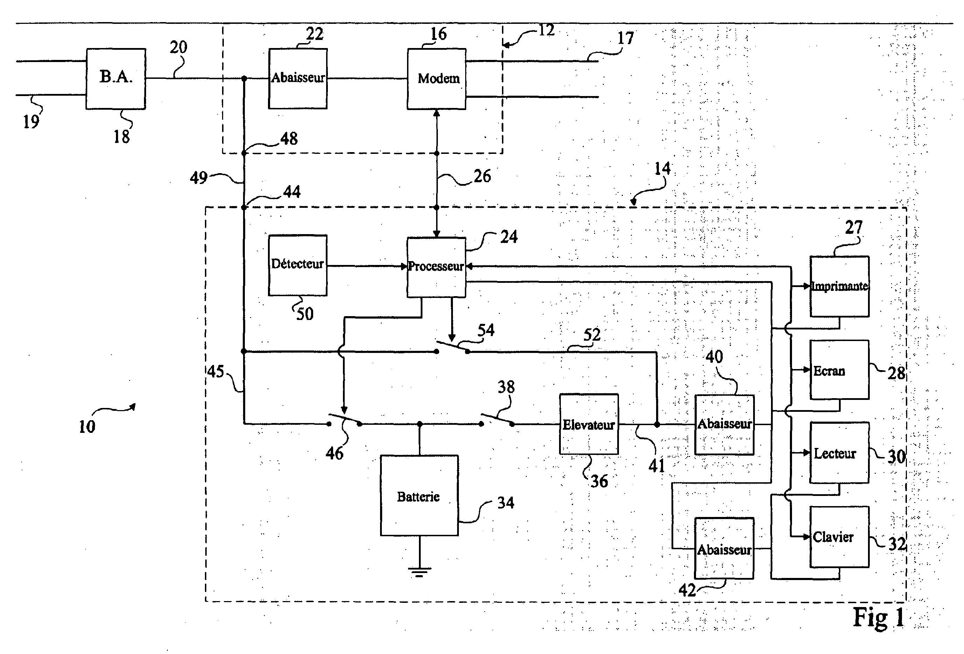

La figure 1 représente un terminal portable de paiement électronique 10 selon l'invention qui se compose d'un socle fixe 12 et d'un terminal mobile 14. Le socle 12 est dit fixe car il n'est pas destiné à être déplacé au cours du fonctionnement normal du terminal de paiement portable 10. Le socle fixe 12 comprend un modem 16 adapté à échanger des données sur un réseau de télécommunications 17, par exemple le réseau téléphonique. L'alimentation du modem 16 est assurée par un bloc d'alimentation 18 relié au réseau de distribution d'énergie électrique 19 et qui transforme le courant alternatif du réseau dé distribution d'énergie électrique en courant continu. Le bloc d'alimentation 18 fournit sur une ligne 20 un courant continu au socle fixe 12, par exemple, à une tension de 5 volts et à une intensité de 1 ampère. La ligne 20 est reliée à un circuit abaisseur 22 fournissant un courant continu adapté au bon fonctionnement du modem 16, par exemple à une tension de 3,3 volts.

Le terminal mobile 14 comprend un processeur 24 adapté à échanger des données avec le modem 16 du socle 12 lorsque le terminal mobile 14 est relié au socle 12. L'échange des données est alors réalisé par l'intermédiaire d'une liaison 26 qui correspond, par exemple, à un contact électrique ou à un couplage optique entre le socle 12 et le terminal mobile 14. Le terminal mobile 14 comprend une imprimante 27, un écran d'affichage 28, un lecteur de carte 30, par exemple un lecteur de carte à puce et/ou de carte magnétique et un clavier 32. Tous ces éléments sont commandés par le processeur 24 de façon classique lors d'une opération de paiement électronique.

Le terminal mobile 14 comprend une batterie 34 utilisée pour l'alimentation du processeur 24, de l'imprimante 27, de l'écran 28, du lecteur 30 et du clavier 32, et de façon générale de l'ensemble des éléments du terminal mobile 14. A titre d'exemple, la batterie peut fournir un courant continu à une tension entre 2,7 volts et 4,5 volts. La batterie 34 est reliée à un circuit élévateur de tension 36, par l'intermédiaire d'un interrupteur 38, fournissant un courant continu dont la tension est supérieure à 3,6 volts. L'interrupteur 38 peut être actionné par l'utilisateur du terminal mobile 14 pour éviter une décharge de la batterie 34 lorsque le terminal mobile 14 n'est pas utilisé. Suivant les tensions d'alimentation requises par les différents composants du terminal mobile 14, on prévoit un ou plusieurs circuits abaisseur de tension qui sont reliés au circuit élévateur 36 et qui alimentent les composants du terminal mobile 14. Sur la figure 1, on a représenté, à titre d'exemple, un premier circuit abaisseur de tension 40 relié à la sortie du circuit élévateur 36 par une ligne 41 et alimentant le processeur 24, l'imprimante 28, et l'écran 28 et un second circuit abaisseur 42 relié à la sortie du premier circuit abaisseur 40 et alimentant le lecteur de carte 30 et le clavier 32.

Le terminal mobile 14 comprend une borne de contact 44 reliée à la batterie 34 par une ligne 45 sur laquelle est prévu un interrupteur 46 commandé par le processeur 24. Le socle 12 comprend une borne de contact 48 reliée à la ligne 20 en amont du circuit abaisseur de tension 22. Lorsque le terminal mobile 14 est relié au socle 12, une liaison électrique 49 est établie entre les bornes 44 et 48. La batterie 34 peut alors être rechargée par le réseau de distribution d'énergie électrique 19 par l'intermédiaire du bloc d'alimentation 18. Le bloc d'alimentation 18 peut également alimenter directement les composants du terminal mobile 14.

Le terminal mobile 14 comprend un détecteur de tension 50 relié au processeur 24 et adapté à détecter la présence d'une tension au niveau de la borne 44.

L'invention consiste, lorsque le réseau de distribution d'énergie électrique 19 est défaillant et lorsque la liaison électrique 49 est établie entre le terminal mobile 14 et le socle fixe 12, à alimenter le modem 16 par la batterie 34 du terminal mobile 14. Le modem 16 peut alors fonctionner normalement et échanger des données sur le réseau téléphonique 17 même lorsque le réseau de distribution d'énergie électrique 19 est défaillant. Pour ce faire, on prévoit une ligne de retour 52 reliant la ligne 45, entre la borne 44 et l'interrupteur 46, et la ligne 41, entre le circuit élévateur 36 et le premier circuit abaisseur 40. La ligne de retour 52 comprend un interrupteur 54 commandé par le processeur 24. L'interrupteur 54 peut limiter l'intensité du courant le traversant à une valeur inférieure à la valeur de limitation obtenue par l'interrupteur 46. A titre d'exemple, l'interrupteur 54 peut limiter le courant le traversant à 100 milliampères. Une telle limitation est nécessaire puisque la batterie 34 peut fournir des courants d'intensité importante, notamment pour alimenter l'imprimante 28 qui peut avoir des appels de courant allant jusqu'à 10 ampères. Il n'est pas possible de prévoir une telle limitation de courant au niveau de l'interrupteur 46, ou de façon plus générale sur la ligne 45. En effet, pour effectuer une recharge de la batterie 34 dans des conditions optimales, il est nécessaire de prévoir des courants de l'ordre de 1 ampère.

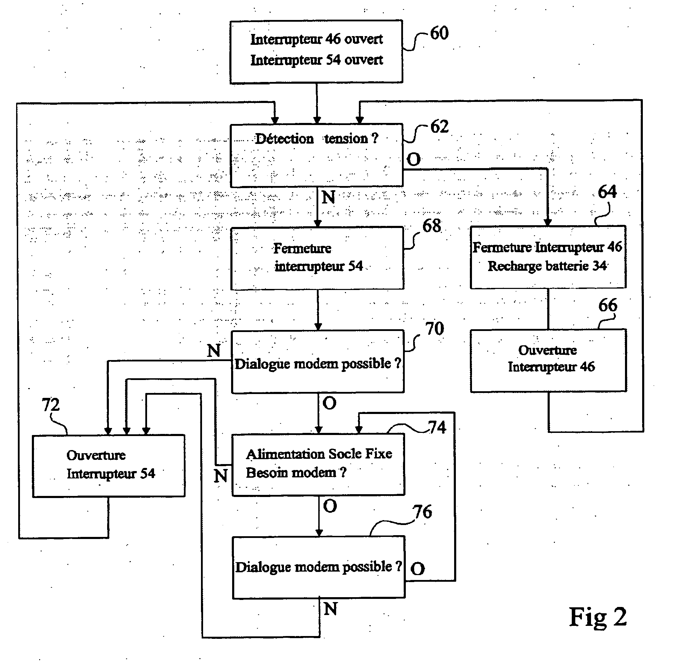

La figure 2 représente schématiquement les étapes d'un exemple de procédé selon l'invention d'alimentation du modem 16 par la batterie 34.

A l'étape 60, le processeur 24 ouvre les interrupteurs 46 et 54. On supposera, par la suite, que l'interrupteur 38 est fermé, par le processeur 24 ou manuellement par l'utilisateur.

A l'étape 62, le processeur 24 détermine, par l'intermédiaire du détecteur 50, si une tension non nulle est présente au niveau de la borne 44. En présence d'une tension non nulle au niveau de la borne 44, le processeur 24 conclut, puisque les interrupteurs 46 et 54 sont ouverts, que la liaison électrique 49 entre le terminal mobile 14 et le socle 12 est établie et que le réseau de distribution d'énergie électrique 19 fonctionne normalement. Le procédé continue alors à l'étape 64.

A l'étape 64, le processeur 24 peut commander, si cela est nécessaire, la fermeture de l'interrupteur 46 pour charger la batterie 34 par l'intermédiaire du bloc d'alimentation 18 et/ou commander la fermeture de l'interrupteur 46 pour que le bloc d'alimentation 18 alimente directement les composants du terminal mobile 14. Lorsque la recharge de la batterie 34 est achevée ou lorsque le détecteur 50 indique que la tension au niveau de la borne 44 s'annule, le procédé continue à l'étape 66.

A l'étape 66, le processeur 24 ouvre l'interrupteur 46 et retourne à l'étape 62.

A l'étape 62, si une tension nulle est détectée au niveau de la borne 44, cela signifie que la liaison électrique 49 entre le terminal mobile 14 et le socle 12 n'est pas établie, ou que la liaison électrique 49 entre le terminal mobile 14 et le socle 12 est établie mais que le réseau de distribution d'énergie électrique 19 ou que le bloc d'alimentation 18 est défaillant. Le procédé continue alors à l'étape 68.

A l'étape 68, le processeur 24 commande la fermeture de l'interrupteur 54 en cas de besoin d'utilisation du modem 16.

A l'étape 70, le processeur 24 fait une tentative de dialogue avec le modem 16 via la liaison 26. Si le dialogue n'est pas possible, cela signifie que la liaison électrique 49 n'est pas établie entre le terminal mobile 14 et le socle 12, le procédé continue alors à l'étape 72.

A l'étape 72, le processeur 24 commande l'ouverture de l'interrupteur 54. Le procédé retourne alors à l'étape 62.

A l'étape 70, si le dialogue avec le modem 16 est possible, cela signifie que la batterie 34 a commencé à alimenter le socle fixe 12 par l'intermédiaire de la liaison électrique 49. Le processeur 24 conclut donc que la liaison électrique 49 entre le terminal mobile 14 et le socle 12 est établie et que le réseau de distribution d'énergie électrique 19 est défaillant. Le procédé continue alors à l'étape 74.

A l'étape 74, le processeur continue la poursuite de l'alimentation du socle fixe 12 par la batterie 34 tant que le besoin d'utiliser le modem 16 existe. Le modem 16 est donc alimenté par l'intermédiaire de la ligne 52 qui transporte un courant dont la tension est fixée par le circuit élévateur 36 et dont l'intensité est limitée par l'interrupteur 54. Si le besoin d'utiliser le modem 16 n'existe plus, le procédé continue alors à l'étape 72. Dans le cas contraire, le procédé continue à l'étape 76.

A l'étape 76, le processeur 24 détermine par l'intermédiaire du dialogue avec le modem 16 si le socle 12 est présent. Si le socle 12 est présent, le procédé continue à l'étape 74, l'alimentation du modem 16 du socle fixe 12 par la batterie 34 étant poursuivie. Si le dialogue avec le modem 16 n'est plus possible, cela signifie que la liaison électrique 49 n'est plus établie entre le terminal mobile 14 et le socle 12, le procédé continue alors à l'étape 72 à laquelle le processeur 24 commande l'ouverture de l'interrupteur 54, et retourne à l'étape 62.

Selon une variante de l'invention, à l'étape 76, après une temporisation déterminée, si la tension au niveau de la borne 44 n'est toujours pas nulle et si le processeur 24 n'est pas en train d'échanger des données avec le modem 16, le procédé se poursuit automatiquement à l'étape 72, à laquelle le processeur 24 ouvre l'interrupteur 54. Ceci permet de recommencer l'étape 62 du procédé de façon à détecter si le réseau de distribution d'énergie électrique 19 a été rétabli.

Selon une autre variante de la présente invention, le détecteur 50 est un détecteur de courant permettant de déterminer le passage d'un courant sur la ligne 45.

La présente invention présente de nombreux avantages :
Premièrement, elle permet d'alimenter le modem 16 du socle fixe 12 par l'intermédiaire de la batterie 34 du terminal mobile 14 lorsque le réseau de distribution d'énergie électrique 19 est défaillant sans requérir l'ajout d'une batterie supplémentaire au niveau du socle fixe 12.
Deuxièmement, la présente invention nécessite l'ajout de peu de composants au niveau du terminal mobile 14. La mise en oeuvre de l'invention est donc particulièrement simple et à faible coût.
Troisièmement, la présente invention permet de limiter facilement le courant fourni par la batterie 34 lors de l'alimentation du modem 16 du socle fixe 12.
Quatrièmement, la présente invention permet d'utiliser un interrupteur 46 qui peut ne pas être bidirectionnel. Ceci est avantageux car un interrupteur bidirectionnel peut être difficile à obtenir notamment lorsqu'il est réalisé à partir de transistors bipolaires. L'interrupteur 46 est alors conçu pour laisser passer le courant le mieux possible depuis la borne 44 vers la batterie 34 et l'interrupteur 54 est conçu pour laisser passer le courant le mieux possible depuis la sortie du circuit élévateur 36 vers la borne 44.

Bien entendu, la présente invention est susceptible de diverses variantes et modifications qui apparaîtront à l'homme de l'art. En particulier, le socle fixe peut également comprendre un processeur commandant le modem. Le processeur du terminal mobile est alors adapté à échanger des données avec le processeur du socle fixe pour commander la transmission de données sur le réseau de télécommunications.

## Revendications

1. Terminal de paiement électronique (10) comprenant :
- un socle (12) destiné à être alimenté par une source d'énergie externe (19) et comprenant un modem (16) destiné à être relié à un réseau de télécommunications (17) ; et
- un terminal mobile (14) adapté à être relié au socle ou à être maintenu à distance du socle et comportant un moyen d'acquisition de données (30) relatives à une opération de paiement, et une batterie (34) adaptée à alimenter les composants du terminal mobile lorsque celui-ci est à distance du socle,
ledit terminal de paiement électronique étant **caractérisé en ce que** le terminal mobile comprend des moyens (24, 44, 48, 49, 52, 54) de commande de l'alimentation du modem par sa batterie (34) lorsque le terminal mobile est relié au socle et que la source d'énergie externe est défaillante.

2. Terminal de paiement électronique selon la revendication 1, dans lequel le terminal mobile (14) et le socle (12) comprennent des moyens (24, 44, 45, 46, 48, 49) de charge de la batterie (34) lorsque le terminal mobile est relié au socle.

3. Terminal de paiement électronique selon la revendication 2, dans lequel le terminal mobile (10) comprend une borne électrique (44) adaptée à établir une liaison électrique (49) avec le socle (12) lorsque le terminal mobile est relié au socle, la borne électrique étant reliée à la batterie (34) par une première ligne (45) comprenant un premier interrupteur (46) et par une seconde ligne (41, 52) comprenant un second interrupteur (54), le terminal mobile comprenant en outre des moyens (24) de fermeture du premier interrupteur et d'ouverture du second interrupteur lorsque la batterie est en cours de recharge et des moyens d'ouverture du premier interrupteur et de fermeture du second interrupteur lorsque la batterie alimente le modem (16).

4. Terminal de paiement électronique selon la revendication 3, dans lequel la batterie (34) est adaptée à fournir un courant électrique ayant une intensité temporairement supérieure à 5 ampères, le second interrupteur (54) étant adapté à limiter l'intensité du courant le traversant.

5. Terminal de paiement électronique selon la revendication 4, dans lequel le terminal mobile (14) comprend un circuit élévateur de tension (36) sur la seconde ligne (41, 52) entre la batterie (34) et le second interrupteur (54).

6. Terminal de paiement électronique selon la revendication 3, dans lequel le terminal mobile (14) comprend un détecteur (50) de tension adapté à déterminer la tension au niveau de la borne électrique (44).

7. Procédé de commande d'un terminal de paiement électronique (10) comprenant un socle (12) destiné à être alimenté par une source d'énergie externe (19), ledit socle comprenant un modem (16) destiné à être relié à un réseau de télécommunications (17), ledit terminal de paiement comprenant, en outre, un terminal mobile (14) adapté à être relié au socle ou à être maintenu à distance du socle, ledit terminal mobile comportant un moyen d'acquisition de données (30) relatives à une opération de paiement, et une batterie (34) adaptée à alimenter les composants du terminal mobile lorsque celui-ci est à distance du socle, **caractérisé en ce que** le procédé comprend les étapes suivantes :
- déterminer si le terminal mobile est relié au socle et si la source d'énergie externe est défaillante ; et
- dans l'affirmative, commander l'alimentation du modem par la batterie.

8. Procédé selon la revendication 7, dans lequel le terminal mobile (10) comprend un processeur (24) adapté à échanger des données avec le modem (16) lorsque le terminal mobile est relié au socle (12), et une borne électrique (44) adaptée à établir une liaison électrique (49) avec le socle lorsque le terminal mobile est relié au socle, la borne électrique étant reliée à la batterie (34) par une première ligne (45) comprenant un premier interrupteur (46) et par une seconde ligne (41, 52) comprenant un second interrupteur (54), le procédé comprenant les étapes suivantes :
a) ouvrir le premier interrupteur (46) et le second interrupteur (54) ;
b) déterminer si une tension nulle est présente au niveau de la borne électrique (44) ;
c) dans l'affirmative, fermer le second interrupteur (54) ;
d) amener le processeur (24) à échanger des données avec le modem (16) ; et
e) si le processeur (24) parvient à échanger des données avec le modem (16), commander l'alimentation du modem par la batterie (34).

9. Procédé selon la revendication 8, comprenant, en outre, si à l'étape b), une tension non nulle est présente au niveau de la borne électrique (44), l'étape consistant à fermer le premier interrupteur (46) pour recharger la batterie (34) à partir de la source d'énergie externe (19).

10. Procédé selon la revendication 8, comprenant, en outre, si à l'étape d) le processeur (24) ne parvient pas à échanger des données avec le modem (16), l'étape consistant à ouvrir le second interrupteur (54).

## Claims

1. An electronic payment terminal (10), comprising:
- a base (12) intended to be powered by an external power source (19) and comprising a modem (16) intended to be connected to a telecommunication network (17); and
- a mobile station (14) capable of being connected to the base or of being maintained away from the base and comprising means for acquiring data (30) relative to a payment operation, and a battery (34) capable of powering the components of the mobile station when said station is away from the base,
the electronic payment terminal being **characterized in that** the mobile station comprises means (24, 44, 48, 49, 52, 54) for controlling the powering of the modem from its battery (34) when the mobile station is connected to the base and the external power source is defective.

2. The electronic payment terminal of claim 1, wherein the mobile station (14) and the base (12) comprise means (24, 44, 45, 46, 48, 49) for charging the battery (34) when the mobile station is connected to the base.

3. The electronic payment terminal of claim 2, wherein the mobile station (10) comprises an electric terminal (44) capable of establishing an electric connection (49) with the base (12) when the mobile station is connected to the base, the electric terminal being connected to the battery (34) by a first line (45) comprising a first switch (46) and by a second line (41, 52) comprising a second switch (54), the mobile station further comprising means (24) for turning on the first switch and for turning off the second switch when the battery is being recharged and means for turning off the first switch and for turning on the second switch when the battery powers the modem (16).

4. The electronic payment terminal of claim 3, wherein the battery (34) is capable of providing an electric current having an intensity temporarily greater than 5 amperes, the second switch (54) being capable of limiting the intensity of the current that it conducts.

5. The electronic payment terminal of claim 4, wherein the mobile station (14) comprises a voltage step-up circuit (36) on the second line (41, 52) between the battery (34) and the second switch (54).

6. The electronic payment terminal of claim 3, wherein the mobile station (14) comprises a voltage detector (50) capable of determining the voltage at the electric terminal (44).

7. A method for controlling an electronic payment terminal (10) comprising a base (12) intended to be powered by an external power source (19), said base comprising a modem (16) intended to be connected to a telecommunication network (17), said payment terminal further comprising a mobile station (14) capable of being connected to the base or of being maintained away from the base, said mobile station comprising means for acquiring data (30) relative to a payment operation, and a battery (34) capable of powering the components of the mobile station when said station is away from the base, **characterized in that** the method comprises the steps of:
- determining whether the mobile station is connected to the base and whether the external power source is defective; and
- if so, controlling the modem power supply from the battery.

8. The method of claim 7, wherein the mobile station (10) comprises a processor (24) capable of exchanging data with the modem (16) when the mobile station is connected to the base (12), and an electric terminal (44) capable of establishing an electric connection (49) with the base when the mobile station is connected to the base, the electric terminal being connected to the battery (34) by a first line (45) comprising a first switch (46) and by a second line (41, 52) comprising a second switch (54), the method comprising the steps of:
a) turning off the first switch (46) and the second switch (54);
b) determining whether a zero voltage is present at the electric terminal (44);
c) if so, turning on the second switch (54); and
d) having the processor (24) exchange data with the modem (16); and
e) if the processor (24) succeeds in exchanging data with the modem (16), controlling the power supply of the modem from the battery (34).

9. The method of claim 8, further comprising, if at step b) a non-zero voltage is present at the electric terminal (44), the step of turning on the first switch (46) to recharge the battery (34) from the external power source (19).

10. The method of claim 8, further comprising, if at step d) processor (24) does not succeed in exchanging data with the modem (16), the step of turning off the second switch (54).

## Patentansprüche

1. Elektronisches Bezahlterminal (10), welches Folgendes aufweist:
eine Basis (12), die von einer externen Leistungsquelle (19) mit Leistung versorgt werden soll und ein Modem (16) aufweist, das mit einem Telekommunikationsnetzwerk (17) verbunden werden soll; und
eine mobile Station (14), die mit der Basis verbunden werden kann oder entfernt von der Basis gehalten werden kann und Mittel zur Aufnahme von Daten (30) aufweist, die sich auf einen Bezahlvorgang beziehen, und eine Batterie (34), welche die Komponenten der mobilen Station mit Leistung versorgen können, wenn die Station von der Basis entfernt ist,
wobei das elektronische Bezahlterminal **dadurch gekennzeichnet** wird, dass die mobile Station Mittel (24, 44, 48, 49, 52, 54) aufweist, um die Leistungsversorgung des Modems von seiner Batterie (34) zu steuern, wenn die mobile Station mit der Basis verbunden ist und die externe Leistungsquelle defekt ist.

2. Elektronisches Bezahlterminal nach Anspruch 1, wobei die mobile Station (14) und die Basis (12) Mittel (24, 44, 45, 46, 48, 49) aufweisen, um die Batterie (34) zu laden, wenn die mobile Station mit der Basis verbunden ist.

3. Elektronisches Bezahlterminal nach Anspruch 2, wobei die mobile Station (10) ein elektrisches Terminal (44) aufweist, welches eine elektrische Verbindung (49) mit de Basis (12) einrichten kann, wenn die mobile Station mit der Basis verbunden ist, wobei das elektrische Terminal mit der Batterie (34) durch eine erste Leitung (45) verbunden ist, die einen ersten Schalter (46) aufweist, und durch eine zweite Leitung (41, 52), die einen zweiten Schalter (54) aufweist, wobei die mobile Station weiter Mittel (24) aufweist, um den ersten Schalter einzuschalten und den zweiten Schalter auszuschalten, wenn die Batterie wieder aufgeladen wird, und Mittel zum Ausschalten des ersten Schalters und zum Einschalten des zweiten Schalters, wenn die Batterie das Modem (16) mit Leistung versorgt.

4. Elektronisches Bezahlterminal nach Anspruch 3, wobei die Batterie (34) einen elektrischen Strom liefern kann, der eine Intensität bzw. Stärke von zeitweise mehr als 5 Ampere hat, wobei der zweite Schalter (54) die Stärke des Stroms beschränken kann, die er leitet.

5. Elektronisches Bezahlterminal nach Anspruch 4, wobei die mobile Station (14) eine Spannungsverstärkungsschaltung (36) in der zweiten Leitung (41, 52) zwischen der Batterie (34) und dem zweiten Schalter (54) aufweist.

6. Elektronisches Bezahlterminal nach Anspruch 3, wobei die mobile Station (14) einen Spannungsdetektor (50) aufweist, der die Spannung am elektrischen Terminal (44) bestimmen kann.

7. Verfahren zur Steuerung eines elektronischen Bezahlterminals (10), welches eine Basis (12) aufweist, die von einer externen Leistungsquelle (19) versorgt werden soll, wobei die Basis ein Modem (16) aufweist, welches mit einem Telekommunikationsnetzwerk (17) zu verbinden ist, wobei das Bezahlterminal weiter eine mobile Station (14) aufweist, die mit der Basis verbunden werden kann oder die von der Basis entfernt gehalten werden kann, wobei die mobile Station Mittel zur Aufnahme von Daten (30) bezüglich eines Bezahlvorgangs aufweist und eine Batterie (34), welche die Komponenten der mobilen Station mit Leistung versorgen kann, wenn die Station von der Basis weggenommen wird, **dadurch gekennzeichnet, dass** das Verfahren folgende Schritte aufweist:
Bestimmen, ob die mobile Station mit der Basis verbunden ist, und ob die externe Leistungsquelle defekt ist; und
falls dies der Fall ist, Steuern der Modemleitungsversorgung von der Batterie.

8. Verfahren nach Anspruch 7, wobei die mobile Station (10) einen Prozessor (24) aufweist, der Daten mit dem Modem (16) austauschen kann, wenn die mobile Station mit der Basis (12) verbunden ist, und einen elektrischen Anschluss (44), der eine elektrische Verbindung (49) mit der Basis einrichten kann, wenn die mobile Station mit der Basis verbunden ist, wobei der elektrische Anschluss mit der Batterie (34) durch eine erste Leistung (45) verbunden ist, die einen ersten Schalter (46) aufweist, und durch eine zweite Leitung (41, 52), die einen zweiten Schalter (54) aufweist, wobei das Verfahren folgende Schritte aufweist:
a) Ausschalten des ersten Schalters (46) und des zweiten Schalters (54);
b) Bestimmen, ob eine Spannung von Null an dem elektrischen Anschluss (44) vorhanden ist;
c) falls dies so ist, Einschalten des zweiten Schalters (54); und
d) Veranlassen, dass der Prozessor (24) Daten mit dem Modem (16) austauscht; und
e) wenn dem Prozessor (24) gelingt, Daten mit dem Modem (16) auszutauschen, Steuern der Leistungsversorgung des Modems von der Batterie (34).

9. Verfahren nach Anspruch 8, welches weiter den Schritt aufweist, den ersten Schalter (46) einzuschalten, um die Batterie (34) von der externen Leistungsquelle (19) wieder aufzuladen, wenn im Schritt b) eine Spannung ungleich Null am elektrischen Anschluss (44) vorhanden ist.

10. Verfahren nach Anspruch 8, welches weiter den Schritt aufweist, den zweiten Schalter (54) auszuschalten, wenn im Schritt d) dem Prozessor (24) nicht gelingt, Daten mit dem Modem (16) auszutauschen.
